# EUROPEAN PATENT SPECIFICATION

(11) **EP 1 563 977 B1**
(45) Date of publication and mention of the grant of the patent: **01.10.2008**
(21) Application number: 04003213.8
(22) Date of filing: 13.02.2004
(51) Int. Cl.: B29C 33/44, B29C 70/44

(54) **Method for the fabrication of a composite article**
Verfahren zur Herstellung eines Gegenstands aus Verbundwerkstoff
Procédé de fabrication d'un article en matière composite

(43) Date of publication of application: 17.08.2005
(73) Proprietor: SAAB AB, 581 88 Linköping (SE)
(72) Inventor: Krogager, Max, 58242 Linköping (SE); Petersson, Mikael, 58951 Linköping (SE); Weidmann, Björn, 59031 Borensberg (SE)
(74) Representative: Holmberg, Magnus

(56) References cited:
- EP-A- 0 410 599
- US-A- 3 538 213

## Description

### TECHNICAL FIELD

The present invention relates to a method for the fabrication of a composite article.

### PRIOR ART

The fabrication of many items and structural elements, such as vehicles, vessels and aircraft, out of curable composite materials containing layers of fibers or metals joined by means of an adhesive layer of for example thermoplastic, is known. Such composite materials are distinguished by high strength and relatively low weight. These distinguishing properties have resulted in it becoming increasingly common in the aviation industry to use items containing composite materials.

Conventionally, structural elements of composite materials are manufactured by arranging a former made of metal on a base plate and laying up laminate layers on the former, so that the laminate lies against the surface of the former. Thereafter, the base plate with the laminate layer covered former is inserted into a pressurized tank, wherein the laminate element is cured. After curing, the cured element is removed from the former. It is known to encapsulate the base plate, former and laminate material in a bag before insertion into the pressurized tank in order to increase the pressure acting on the composite material in the pressurized tank. The use of the bagging-technique is widely spread and variants of the bagging-technique are described in a great number of patent documents, books and articles.

One drawback with the above mentioned method for manufacturing structural elements of laminates is that only structural elements having a very simple structure can be manufactured using said technique, as the cured structural element has to be removed from the former.

US 3 538 213 discloses a method of manufacturing simple hollow products using a destructible former.

GB 2 275 015 describes a destructible, hollow former used in manufacture of a hollow article from composite materials. The former is made by charging a rotational molding tool with sufficient quantity of a hot melt/cold set water soluble compound as is required to coat the internal surfaces of the tool to a desired thickness, and start rotation. In a next step, the rotating tool is moved into a heated oven and is kept there for a sufficient time to permit the compound to be molten and coat all internal surfaces of the tool. After removal from the oven, rotation of the tool is continued to allow the tool to cool to a temperature at which the compound hardens. Then, the tool is opened and the former is removed. The former can now be used in the manufacture of a hollow article, wherein the manufacture comprises laying upon the former a required combination of materials, curing the materials on the former and destroying the former to obtain the hollow article. The former is destroyed either by impacting it with a hard instrument to break it into pieces or by dissolution in water.

EP 0 410 599 A2 discloses a method of forming thermoformable composite material bodies using pressure by vacuum.

An object of the invention is to provide method for the manufacture of articles including said complex structural elements using destructible formers as defined in claim 1.

### SUMMARY OF THE INVENTION

A method for the fabrication of a former for manufacture of composite articles comprises the following steps: forming a wetted water-soluble fiber composite material, preferably in laminated form, on a master tool, allowing the water-soluble fiber composite material to dry on the master tool and removing the dry water-soluble fiber composite material from the master tool, wherein the fiber composite material forms the walls of the manufactured former. The wetted fiber composite material comprises a fiber material and an adhesive and water. The fiber material is for example a fabric such as a woven textile, glass, carbon, aramide etc. For example, a dishcloth could serve as the fiber material. The adhesive is for example a starch such as starch from corn, potatoes or wheat or an adhesive of another type such as polyvinyl alcohol (PVA). For example, paperhangers paste can be used comprising both starch and water. In another example, one or more sheets of paper are used as the fiber composite material; in this case it is only necessary to add water and starch forming the material on the master tool. The laminated fiber composite material comprises two or more layers of the material laminated by using the adhesive component.

The composite articles manufactured using said former are fiber composite articles. The fiber composite material of the article comprises in one example the fiber material and a thermosetting plastic, such as epoxy, vinyl ester or polyester. The fiber material comprises for example glass fibers, carbon fibers or aramide fibers.

The invention comprises a method for the manufacture said composite articles. The method comprises the steps as defined in claim 1.

In using the former it is possible to manufacture composite articles with very complex geometries in only one cure operation. Further, the laminate material of the former is light in weight and easy to handle. It is also very easy to perform cutting, milling, drilling and other types of forming operations on the former laminate walls. Another advantage with the invention is that the former laminate has a low thermal conductivity, whereby it is easier to obtain thermal stability. The low thermal conductivity also gives rise to shortened cure cycles when curing is performed at an enhanced temperature, such as in the region 100°C to 200C°. The cure cycle can then at least be halved.

Further, it is much easier to obtain the tolerance chain compared to when using conventional techniques with non-flexible tools, such as metal tools. For the manufacture of composite articles in accordance with the invention, important tolerance determined dimensions for the final article can be determined, and the manufacture can then be performed such that these tolerances are kept.

When the curing process is performed under an enhanced pressure, for example in a so-called autoclave, it can be necessary to support the former in the curing process. In the invention, this is achieved by providing a substantially unitary pressure on all the surfaces of the lay-up in the curing process. The substantially unitary pressure is provided by enclosing the surfaces of the lay-up in at least one bag and applying vacuum, between the lay-up and the bags.

The more evenly distributed pressure during curing also provides for a higher quality of the final article, wherein the risk of air pockets in the article is minimized.

### SHORT DESCRIPTION OF THE DRAWING

Fig 1 shows a perspective view of a master tool for the manufacture of a former according to one embodiment of the invention
Fig 2 shows in cross-section the former on the master tool.
Fig 3 shows in cross-section a lay-up according to one embodiment of the invention for the manufacture of an article.
Fig 4 shows in cross-section the lay-up of Fig 3, enclosed in bagging films.
Fig 5 shows schematically a water tank into which the lay-up is submerged.
Fig 6 shows a perspective view of an omega profile.
Fig 7 shows a perspective view of an article manufactured in accordance with the invention in only one cure operation.

### PREFERRED EMBODIMENTS

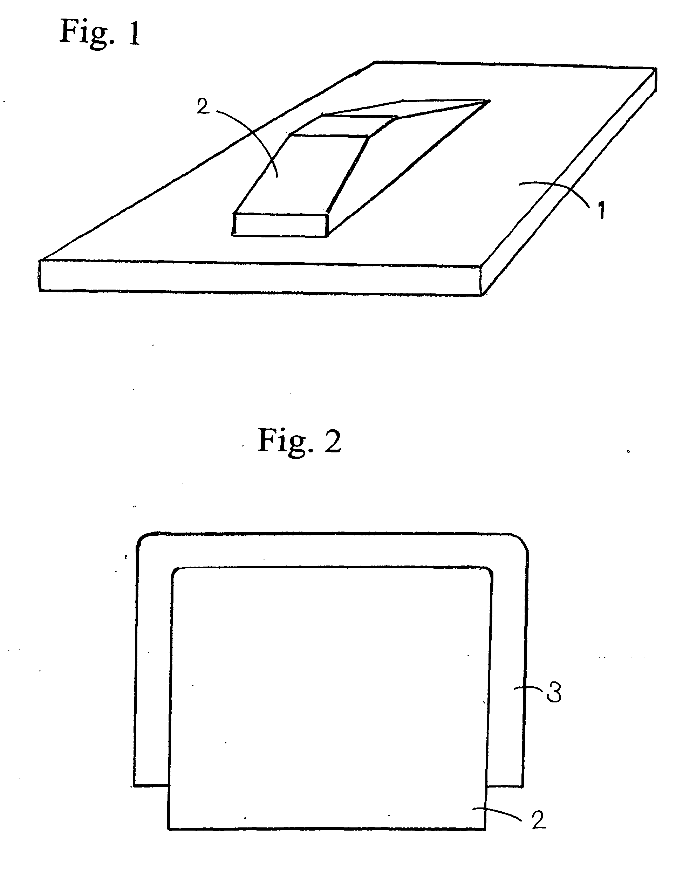

In Fig 1, a tool for the manufacture of a former in the form of a water-soluble stabilizing fiber composite 3 (see Fig 2) comprises a base plate 1 and a master tool 2 arranged on the base plate 1. The base plate is a thick sheet for example made of metal. The master tool can be made of a metal, but can also be a wooden or plastic material or a material of another type. The tool of Fig 1 can be used for manufacturing an arbitrary number of stabilizing fiber composite formers 3.

In Fig 2, the former material, such as a fabric wetted by a mixture of water and starch, is placed on the master tool 2 such that the former 3 lies against the surface of the master tool 2. As the fabric is wetted, it can easily be formed around the surface of the master tool 2. For example, in a case where the former 3 forms a profile, it is not necessary that the whole surface of the master tool is covered by the wetted fabric, as the profile suitably has open ends. The wetted fabric can advantageously dry over night in room temperature. If it is necessary to provide the former 3 quicker, it can dry in a chamber with enhanced temperature. When the former 3 has dried, it is stiff and can be removed from the master tool 2. The master tool 2 can be shaped in order to make formers 3 of a great number of different shapes. For example, profiles can be made, such as hat profiles, omega profiles etc. The former 3 can now be used for manufacturing composite articles and structure elements of said composite material formed for example as curved profiles or closed profiles, which was not possible with prior art methods. The term closed profiles is intended to relate to profiles having a smaller cross section area at the ends than on parts between the ends.

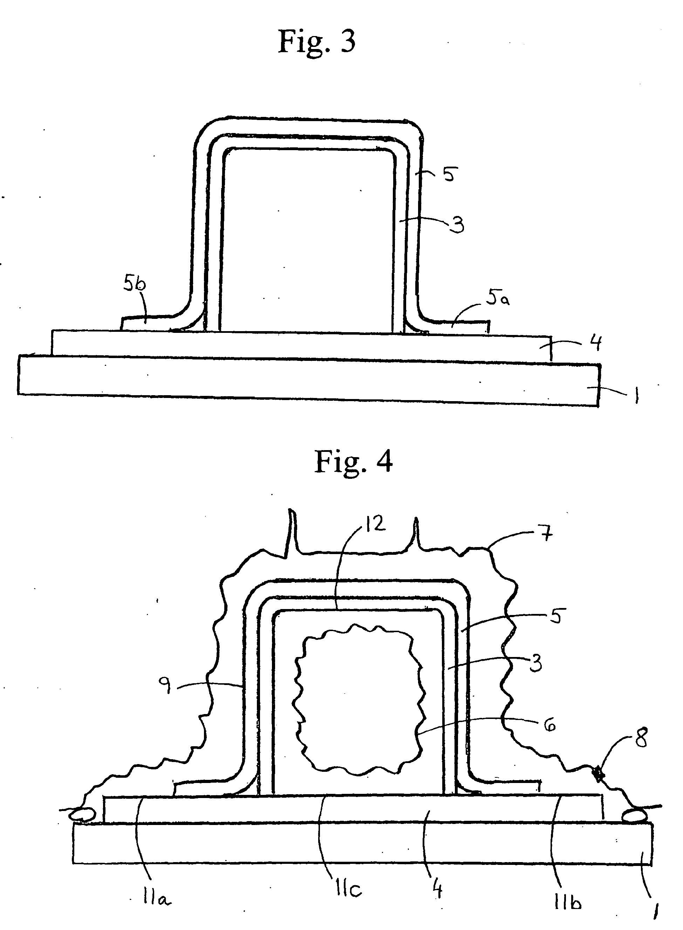

In Fig 3 the base plate 1 is used again. A composite plate 4 is arranged on the base plate 1. The dry former 3 is arranged on top of the composite plate 4. A composite layer 5 is formed around one or more surfaces of the former 3 such that it lies against the former in a layer having a unitary thickness. The composite plate 4 then forms the outer surface of the final article and the composite layer 5 forms a stiffener, spar, fitting etc integrated with the article. In the example in the shown figure, the composite layer 5 covers the outer surface of the former 3. The stabilizing laminate further extends down into contact with the composite plate 4 by means of contact parts 5a, 5b so that the composite layer 5 can be integrated with the composite plate 4 in the following curing process. The composite plate 4 and the composite layer 5 can be of the same material or of different materials.

In Fig 4, an outer vacuum bagging film 7 is enclosing the outer surfaces 9 of the layer 5 and the open surfaces 11a, 11b of the composite plate 4. In the shown example, the film is fastened along the periphery of the base plate 1, using some fastening means, such as, e.g. adhesive tape and bagging sealtants. An inner bagging film 6 is placed inside the former 3. The circumference of the inner bagging film 6 is chosen such that the inner bagging film 6 can seal tight against the walls defined by the inner surface 12 of the former 3 by the adjacent surface 11c of the composite plate 4. The edges of the vacuum bagging films 6,7 are connected to each other and sealed. This is called free standing bagging.

When a pump (not shown) is started, the gas that is present between the bagging films 6,7 will be carried away through at least one outlet 8 in the bagging films 6, 7. Thereby a vacuum will be created, whereupon the bagging films will seal tight upon the outer surfaces 9, 11a, 11b of the composite layer 5 and composite plate 4 and upon the walls 12, 11c defined by the inner surfaces of the former 3 and the composite plate 4. It should be noted that additional elements can be arranged between the article and the bagging films 6,7; for example, a perforated plastic film (not shown) can be placed nearest the article/former, and a so-called tear-away cloth (not shown) can be placed between the article/former and the bagging films.

The base element 1 with its associated article parts 4, 5 and the former 3 can be put into a pressure tank, whereby curing is performed under an increased pressure compared to normal air pressure, for example 1 to 6 bar overpressure. The curing can be performed in a so-called autoclave wherein the curing is performed in heat, for example in the temperature region of 100°-200°C, and under an increased pressure, such as 1-6 bar overpressure. The curing can be performed in an oven for example in the temperature region of 100°-200°C.

In using this bagging technique, wherein a unitary pressure is provided on former of the stabilizing laminate both from beneath and from above, the former 3 will withstand high curing pressures without collapsing and therefore perform as well as a conventional metal former in that aspect.

The choice of the thickness of the former 3 is made considering the height of the former 3 and the former material. A person skilled in the art would perform strength calculations and tests in order to come up with a suitable wall thickness of the former. As an example, a 120mm high former 3 made of a starch/fabric fiber composite and bagged-in at vacuum in an autoclave preferably has a thickness in the region of 0,5-2mm.

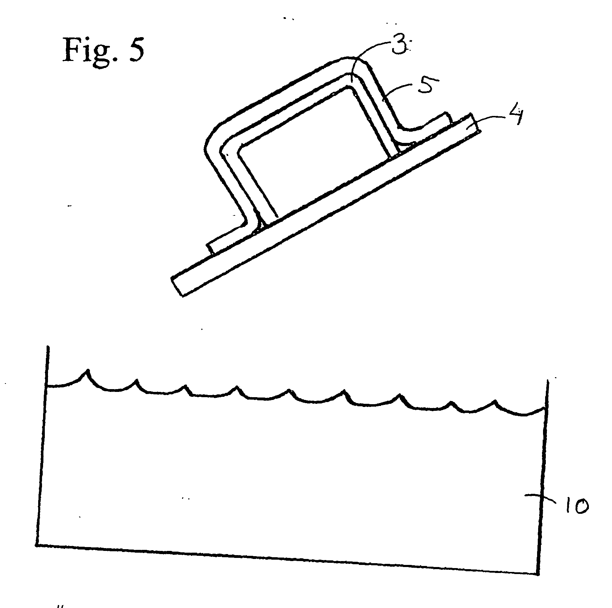

In Fig 5, the cured article including the former 3 is debagged and submerged in a water tank 10. The water dissolves the starch, whereby the stabilizing laminate softens and thus becomes easy to remove. Alternatively, running water can be applied to the former 3 in order to dissolve the starch.

The invention has now been explained in relation to the manufacture of a quite simple article. One great advantage of the invention is that it allows for the manufacture of very complex geometries in only one cure operation. As the dried stabilizing composite material of the former 3 is well suited for performing different operations on, such as cutting, milling, drilling, etc, a complex pattern of crossing profiles can be developed on the composite plate 4 and the composite layers 5 can be formed on the crossing former profiles. The composite layers 5 of the final article can then form hat stiffener profiles, omega profiles, closed profiles, curved profiles and crossing spars capable of transferring both shear and bending loads.

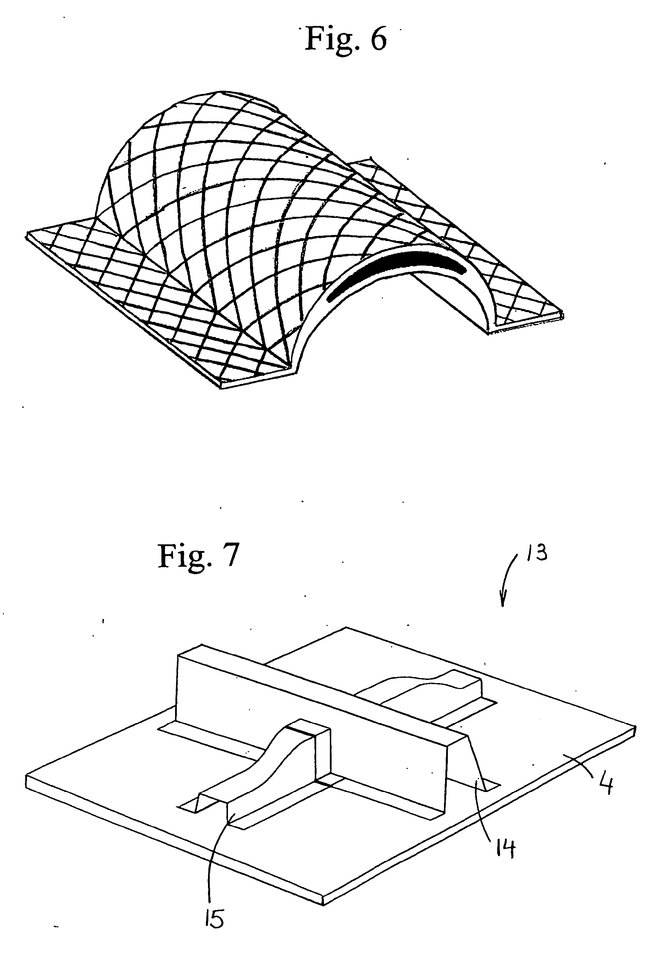

Fig 6 shows a curved omega profile made using a former 3 according to the invention.

In fig 7, an article 13 is shown having crossing profiles including a hat stiffener profile 14 and a closed profile 15 integrated on the composite plate 4.

## Claims

1. Method for the manufacture of a fiber composite article, **characterized by** the steps of:
- placing on a base plate (1) a composite plate (4) forming a part of the article,
- placing on the composite plate (4) a former (3) having walls of a water-soluble fiber composite material,
- producing a lay-up (5) of an uncured thermosettable fiber composite material by applying it on at least one surface of the former (3),
- enclosing the outer surfaces (9) of the lay-up (5) and outer surfaces (11a, 11b) of the composite plate (4) in an outer bagging film (7),
- placing an inner bagging film (6) in a space defined by the former (3) and an adjacent surface (11c) of the composite plate (4),
- applying a substantially unitary pressure on the outer surfaces (9) of the lay-up (5) by applying a vacuum between the lay-up (5) and the outer bagging film (7) and simultaneously applying the same unitary pressure on the inner surfaces (12) of the water-soluble former (3) by applying the same vacuum between the inner surfaces (12) of the former (3) and the inner bagging film (6), so that the outer and inner bagging films (7, 6) will seal tightly upon the outer surfaces (9, 11a, 11b) of the lay-up (5) and the composite plate (4) and upon the inner surfaces (12) of the former (3) and the adjacent surface (11c) of the composite plate (4),
- curing the lay-up (5) in a curing process,
- removing the bagging films (6, 7), and
- removing the former (3) from the cured composite article by dissolving the former (3) in water.

2. Method according to claim 1, **characterized in that** the removal of the dissolved former (3) is carried out through an opening in the cured composite article.

3. Method according to claim 1 or 2, **characterized in that** the water-soluble fiber composite material includes a woven textile fabric.

## Patentansprüche

1. Verfahren zur Herstellung eines Faserverbundartikels, **gekennzeichet durch** die folgenden Schritte:
Anordnen einer Verbundplatte (4), die einen Teil des Artikels bildet, auf einer Basisplatte (1),
Anordnen eines Formers (3) mit Wänden aus einem wasserlöslichen Faserverbundmaterial auf der Verbundplatte (4),
Herstellen eines Laminats (5) aus einem nicht ausgehärteten wärmehärtbaren Faserverbundmaterial durch sein Auftragen auf zumindest eine Oberfläche des Formers (3),
Einschließen der äußeren Oberflächen (9) des Laminats (5) und äußeren Oberflächen (11a, 11b) der Verbundplatte (4) in einem äußeren Packfilm (7),
Anordnen eines inneren Packfilms (6) in einem Raum, der durch den Former (3) und eine anschließende Oberfläche (11c) der Verbundplatte (4) definiert ist,
Anlegen eines im Wesentlichen gleichförmigen Drucks auf die äußeren Oberflächen (9) des Laminats (5) durch Anlegen eines Vakuums zwischen dem Laminat (5) und dem äußeren Packfilm (7) und gleichzeitiges Anlegen desselben, gleichförmigen Drucks an die inneren Oberflächen (12) des wasserlöslichen Formers (3) durch Anlegen desselben Vakuums zwischen den inneren Oberflächen (12) des Formers (3) und dem inneren Packfilm (6), so dass die äußeren und inneren Packfilme (7, 6) dicht mit den äußeren Oberflächen (9, 11a, 11b) des Laminats (5) und der Verbundplatte (4) und mit den inneren Oberflächen (12) des Formers (3) und der anschließenden Oberfläche (11c) der Verbundplatte (4) abschließen,
Aushärten des Laminats (5) in einem Härtungsprozess,
Entfernen der Packfilme (6, 7), und
Entfernen des Formers (3) von dem ausgehärteten Verbundartikel durch Auflösen des Formers (3) in Wasser.

2. Verfahren nach Anspruch 1, **dadurch gekennzeichnet, dass** das Entfernen des aufgelösten Formers (3) durch eine Öffnung in dem ausgehärteten Verbundartikel durchgeführt wird.

3. Verfahren nach Anspruch 1 oder 2, **dadurch gekennzeichnet, dass** das wasserlösliche Faserverbundmaterial ein gewobenes Textilgewebe enthält.

## Revendications

1. Méthode de fabrication d'un article en fibres composites, **caractérisée par** les étapes consistant à :
- placer sur une plaque de base (1) une plaque composite (4) formant une partie de l'article,
- placer sur la plaque composite (4) un formeur (3) ayant des parois d'un matériau en fibres composites soluble dans l'eau,
- produire une structure composite (5) d'un matériau en fibres composites thermodurcissable non durci en l'appliquant sur au moins une surface du formeur (3),
- envelopper les surfaces extérieures (9) de la structure composite (5) et les surfaces extérieures (11a, 11a) de la plaque composite (4) dans un film d'ensachage extérieur (7),
- placer un film d'ensachage intérieur (6) dans un espace défini par le formeur (3) et une surface adjacente (11c) de la plaque composite (4),
- appliquer une pression sensiblement unitaire sur les surfaces extérieures (9) de la structure composite (5) en appliquant une dépression entre la structure composite (5) et le film d'ensachage extérieur (7) et en appliquant simultanément la même pression unitaire sur les surfaces intérieures (12) du formeur soluble dans l'eau (3) en appliquant la même dépression entre les surfaces intérieures (12) du formeur (3) et le film d'ensachage intérieur (6), de sorte que les films d'ensachage extérieur et intérieur (7, 6) se scellent étroitement sur les surfaces extérieures (9, 11a, 11b) de la structure composite (5) et de la plaque composite (4) et sur les surfaces intérieures (12) du formeur (3) et la surface adjacente (11c) de la plaque composite (4),
- durcir la structure composite (5) dans un processus de durcissement,
- enlever les films d'ensachage (6, 7), et
- enlever le formeur (3) de l'article composite durci en dissolvant le formeur (3) dans de l'eau.

2. Méthode selon la revendication 1, **caractérisée en ce que** l'enlèvement du formeur dissout (3) est effectué à travers une ouverture dans l'article composite durci.

3. Méthode selon la revendication 1 ou 2, **caractérisée en ce que** le matériau en fibres composites soluble dans l'eau comprend un tissu textile tissé.
